# EUROPÄISCHE PATENTSCHRIFT

(11) **EP 1 826 882 B1**
(45) Veröffentlichungstag und Bekanntmachung des Hinweises auf die Patenterteilung: **30.09.2009**
(21) Anmeldenummer: 07000641.6
(22) Anmeldetag: 13.01.2007
(51) Int. Cl.: H02G 7/00

(54) **Isolierabdeckung für eine Traverse eines Freileitungsmastes**
Insulation cover for a traverse of a pylon
Revêtement isolant pour une traverse de pylône de ligne électrique aérienne

(30) Priorität: 22.02.2006 DE 202006002948 U
(43) Veröffentlichungstag der Anmeldung: 29.08.2007
(73) Patentinhaber: Europoles GmbH & Co. KG, 92318 Neumarkt (DE)
(72) Erfinder: Simson, Georg, 92348 Berg (DE); Gottschalk, Harald, 92358 Batzhausen (DE)
(74) Vertreter: Schneider, Andreas

(56) Entgegenhaltungen:
- WO-A-03/007448
- DE-A1- 4 401 434
- DE-A1- 10 241 123
- DE-U1- 29 804 595
- GB-A- 268 463
- US-A- 914 042
- US-A- 3 328 511

## Beschreibung

Die Erfindung betrifft einen Mast für eine elektrische Freileitung mit einer Traverse, an der wenigstens ein Leitungsseil mittels eines Stützisolators abgestützt wird.

Aus dem Stand der Technik sind solche Freileitungsmaste bekannt. Sie werden vorwiegend bei Mittelspannungs-Freileitungen (1 bis 60 kV) bei regionalen Verteilungsnetzen eingesetzt. Bei derartigen Mittelspannungs-Freileitungen werden die einzelnen Leiterseile zumeist mittels Stützisolatoren an einer Traverse des Freileitungsmastes abgestützt. Dabei ist jedem Leiterseil ein Stützisolator zugeordnet.

Derartige Freileitungsmaste sind beliebte Beobachtungs- und Ruheplätze für Vögel. Insbesondere Großvögel, z. B. Störche, Greifvögel und dergleichen, kommen jedoch häufig zu Tode, wenn sie beim Flügelschlagen mit einem spannungsführenden Leiterseil in Verbindung kommen, wodurch ein Erdschluß herbeigeführt wird. Darüber hinaus kann die Berührung der Leiterseile durch einen Vogel zu Erd- oder Phasenkurzschlüssen der Freileitung mit erheblichen betriebswirtschaftlichen Folgen führen.

Sowohl aus Gründen des Tierschützes, als auch aus betriebswirtschaftlichen Gründen wird daher nach Lösungen gesucht, derartige Vorfälle zu vermeiden.

So ist es beispielsweise bekannt, für Vögel eine von der Traverse beabstandete Ruheposition bereitzustellen, die gefahrlos bezogen werden kann. Dabei werden Sitzstangen eingesetzt, die vor allem Großvögeln einen Ruheplatz bieten können, der von spannungsführenden Teilen entfernt angeordnet ist. In einem anderen Ansatz ist es darüber hinaus bekannt, eine Landung von Großvögeln auf der Traverse durch die Verwendung eines sogenannten Büschelabweisers zu verhindern. In einem weiteren Ansatz werden zur Vermeidung eines Erdschlusses die einzelnen Leitungsseile im Bereich der Stützisolatoren mit einer isolierenden Umhüllung versehen.

Bei sämtlichen Lösungen müssen konstruktiv aufwendige und damit teure, beziehungsweise bei der Montage schwierig zu handhabende Zusatzelemente am Freileitungsmast montiert werden. Zudem behindern oder erschweren die Zusatzelemente oft spätere Arbeiten am Freileitungsmast.

Ein Freileitungsmast mit einer an einem Mast angeordneten Traverse, an der wenigstens ein Leitungsseil mittels eines Stützisolators abgestützt wird, und wobei die Traverse zumindest teilweise mit einer Abdeckung aus einem elektrisch isolierenden Material versehen ist, die flächig an der Traversenoberseite anliegt, ist aus GB 268,463 bekannt. Nachteilig bei der dort beschriebenen Lösung ist es jedoch, daß ein Berührungsschutz gegenüber der Stützisolatorbefestigung nicht gewährleistet ist.

Eine Aufgabe der vorliegenden Erfindung ist es, eine konstruktiv einfache und kostengünstige Lösung für die oben genannten Probleme bereitzustellen. Diese Aufgabe wird durch einen Freileitungsmast nach Anspruch 1 bzw. durch eine Abdeckung nach Anspruch 9 gelöst. Der erfindungsgemäße Freileitungsmast weist danach eine Traverse auf, die zumindest teilweise mit einer Abdeckung aus einem elektrisch isolierenden Material versehen ist, wobei die Abdeckung im Bereich des Stützisolators ein von der Traversenoberseite abstehendes Abstandelement zur Gewährleistung eines Berührungsschutzes gegenüber der Stützisolatorbefestigung aufweist.

Im Gegensatz zu den aus dem Stand der Technik bekannten Lösungen wird eine effektiver Vogelschutz erfindungsgemäß durch die Isolierung der Traverse selbst erreicht. Dieser völlig neuartige Ansatz ermöglicht eine konstruktiv einfache und kostengünstige Lösung für den Vogelschutz.

Von Vorteil bei der erfindungsgemäßen Lösung ist es, daß dabei der eigentliche Traversenkörper nicht verändert werden muß. Änderungen in den Herstellungsverfahren für Traversen und die weiteren Bauteile des Freileitungsmastes sind daher nicht erforderlich.

Die erfindungsgemäße Abdeckung läßt sich ohne weiteres an der Traverse befestigen. Insbesondere sind hierzu keinerlei Demontagearbeiten am Leitungsmast erforderlich. Besonders vorteilhaft ist es darüber hinaus, daß mit der erfindungsgemäßen Lösung bereits vorhandene Leitungsmaste äußerst einfach und kostengünstig nachgerüstet werden können.

Die Anzahl der Ausfälle in der Stromversorgung und damit auch die Folgekosten, insbesondere durch Netzabschaltungen, lassen sich somit deutlich verringern. Darüber hinaus entfallen die Kosten für die Herstellung und die Montage zusätzlicher Vogelschutzelemente. Auch müssen die Vogelkadaver nicht mehr von den Hochspannungsmasten entfernt werden. Spätere Arbeiten an dem Freileitungsmast werden nicht mehr durch Vogelschutzelemente behindert oder erschwert.

Die erfindungsgemäße Freileitungsmaste sind besonders für den Einsatz bei Mittelspannungs-Freileitungen geeignet. Aber auch eine Verwendung bei Nieder-, Hoch- und Höchstspannungs-Freileitungen ist möglich. Dabei werden unter dem Begriff "Freileitungsmast" alle möglichen Arten von Masten verstanden, die bei der Installation von Freileitungen verwendet werden, einschließlich Tragmaste, Abspannmaste, Winkelmaste und Endmaste sowie Maste zur Kabelabführung und Kabelaufführung.

Vorteilhafte Ausführungsformen der Erfindung sind in den Unteransprüchen angegeben und werden nachfolgend mit Hilfe der Figuren näher beschrieben. Hierbei zeigen:
- Fig. 1: eine schematische Darstellung eines Freileitungsmastes mit Stützisolatoren,
- Fig. 2: eine schematische Darstellung eines Freileitungsmastes mit Doppelisolatoren,
- Fig. 3: eine schematische Seitenansicht einer Traverse,
- Fig. 4: eine schematische Draufsicht auf eine Traverse,
- Fig. 5: eine Schnittdarstellung entlang der Linie AA in Fig. 3,
- Fig. 6: eine Fig. 5 entsprechende Schnittdarstellung einer weiteren Ausführungsform der Erfindung, und
- Fig. 7: eine Ausführungsform mit Breitenverstellung.

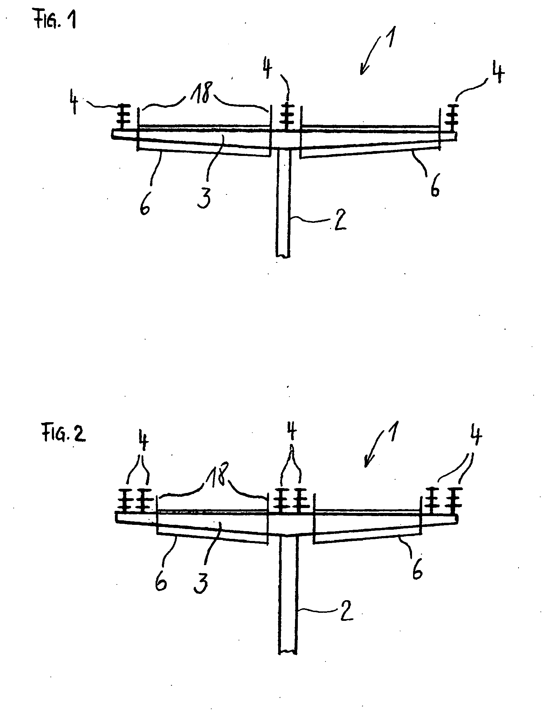

Der abgebildete 20 kV-Freileitungsmast 1 umfaßt einen vertikal verlaufenden Mast 2, an dessen Ende eine horizontal verlaufende Quertraverse 3 angeordnet ist, vgl. Fig. 1. An den beiden Enden der Traverse 3 sowie in deren Mitte ist jeweils ein Stützisolator 4 vorgesehen, der mit der Traverse 3 über eine Stützisolatorbefestigung 5 verbunden ist, vgl.

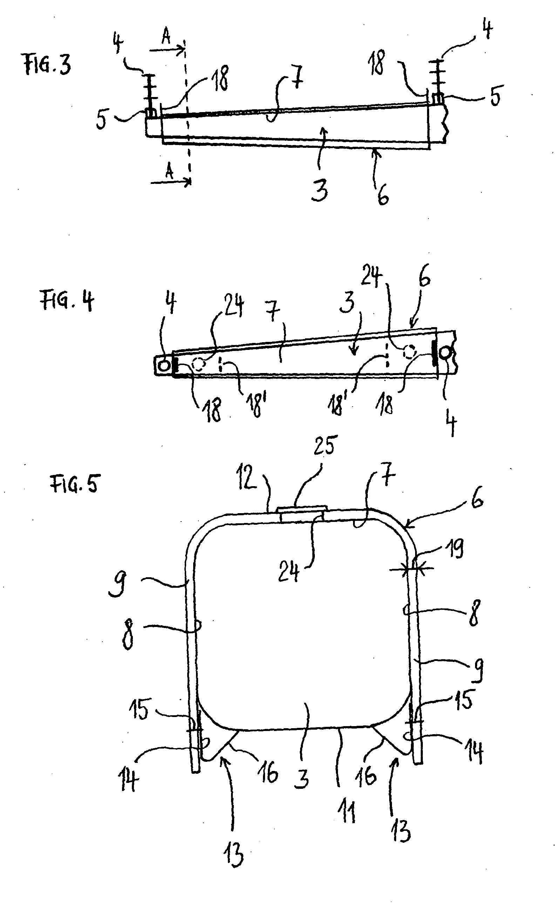

Fig. 3. Die Stützisolatoren 4 dienen zum Abstützen jeweils eines Leitungsseils (nicht dargestellt).

Der Mast 2 besteht vorzugsweise aus feuerverzinktem oder flammspritz-verzinktem Stahl der Güte ST-37 oder ST-52 und ist mit einem Schutzanstrich versehen. Der Querschnitt des Mastes 2 ist achteckig. Es können jedoch auch andere, insbesondere andere konische Querschnitte zum Einsatz kommen, aber auch beispielsweise ein Zwölfkantquerschnitt.

Die Traverse 3 ist vorzugsweise als geschweißte Vierkant-Hohlkastenkonstruktion ausgeführt, vgl. Fig. 5, und ebenfalls aus feuerverzinktem oder flammspritz-verzinktem Stahl der Güte ST-37 oder ST-52 gefertigt. Vorzugsweise läuft dabei das Vierkantprofil nach außen hin konisch zu. Die Befestigung der Traverse 3 am Mast 2 erfolgt vorzugsweise über eine Schweißverbindung.

Die Ausladung, also der Abstand von dem in der Mitte der Traverse 3 angeordneten Stützisolator 4 bis zu einem der beiden äußeren Stützisolatoren 4, beträgt je nach Ausführung beispielsweise 1600, 1800 oder 2000 mm.

Entsprechend einer Ausführungsform der Erfindung ist der Freileitungsmast 1 lediglich als Mastelement ausgeführt ist und unterhalb der Traverse 4 ein Befestigungselement (nicht dargestellt) aufweist zur Befestigung des Mastes 2 auf oder an einem weiteren Mast oder dergleichen. Der Freileitungsmast 1 kann dann als eine Art "Mastkopf" zum Aufsetzen beziehungsweise Aufstecken auf einen bereits bestehenden Mast verwendet werden. Die Verbindung erfolgt dabei vorzugsweise mittels Steckstoß, insbesondere als Schachtel-Steckstoß. Jedoch können auch andere Verbindungsarten, wie beispielsweise Flansch-Schraubstoß verwendet werden. Diese Lösung ist insbesondere dann interessant, wenn bereits bestehende Maste überarbeitet beziehungsweise erneuert werden müssen. Das Fundament und große Teile des alten Mastes können dann wiederverwendet werden. Lediglich die alte Mastspitze, aufgrund derer die Reparatur oftmals erfolgen muß, wie dies beispielsweise bei älteren Betonmasten häufig der Fall ist, wird entfernt. Auf den übriggebliebenen Maststumpf wird der erfindungsgemäße Freileitungsmast 1 als eine Art Kopfstück aufgesteckt.

Zwischen den Stützisolatoren 4 weist die Traverse 3 jeweils eine Abdeckung 6 auf. Aus Gründen der besseren Darstellbarkeit sind die Abdeckungen 6 transparent dargestellt. Die erfindungsgemäße Lösung kann sowohl bei Einfach- als auch Doppelisolatoren zum Einsatz kommen, vgl. Fig. 2.

Die Abdeckung 6 weist ein im wesentlichen U-förmiges Profil auf, vgl. Fig. 5. Dadurch ist nicht nur die Traversenoberseite 7 abgedeckt. Auch die Traversenseitenflächen 8 sind isoliert. Die U-Schenkel 9 der Abdeckung 6 erstrecken sich dabei über die Traversenunterseite 11 hinaus in Richtung Boden.

Die Länge der U-Schenkel 9 nimmt dabei von den Enden der Traverse 3 beginnend in Richtung Traversenmitte zu, entsprechend dem konischen Verlauf des Traversen-Vierkantprofils, vergleiche Fig. 3. Ebenso verbreitert sich der U-Grund 12 der Abdeckung 6 in Richtung Traversenmitte, vergleiche Fig. 4.

Der U-Grund 12 sowie die sich an den U-Grund 12 anschließenden Bereiche der U-Schenkel 9 liegen flächig an der Traversenoberseite 7 bzw. den Traversenseitenflächen 8 an. Dadurch ergibt sich ein sehr sicherer mechanischer Kontakt und Bewegungen der Abdeckung 6 relativ zu der Traverse 3 werden verhindert.

In einer ersten Ausführungsform weisen die U-Schenkel 9 zur Fixierung der Abdeckung 6 an der Traverse 3 Befestigungselemente zur Ausbildung einer Rast- und/oder Schnappverbindung auf, vgl. Fig. 5. Dabei sind die Befestigungselemente vorzugsweise als im wesentlichen V-förmige Federstahlprofile 13 ausgebildet, wobei der eine V-Schenkel 14 an der Innenseite eines U-Schenkels 9 der Abdeckung 6 mit Hilfe einer Nietverbindung 15 befestigt ist, während sich der andere V-Schenkel 16 im montierten Zustand an der Traversenunterseite 11 abstützt. Dieser zweite V-Schenkel 16 weist mit anderen Worten in Richtung U-Grund 12 bzw. in Richtung des gegenüberliegenden U-Schenkels 9.

Zur Montage der Abdeckung 6 an der Traverse 3 wird die Abdeckung 6 einfach von oben in Montagerichtung 17 senkrecht zur Traversenoberseite 7 auf die Traverse 3 "aufgeklipst"

Die Abdeckung 6 ist vergleichsweise starr und formstabil. Bei der Montage werden die ausstehenden V-Schenkel 16 durch den Traversenkörper in Richtung der fixierten V-Schenkel 14 gedrückt. Erreicht die Abdeckung 6 ihre Montageendposition, federn die V-Schenkel 16 der Federstahlprofile 13 automatisch aus und untergreifen die Traversenunterseite 11. Dadurch wird eine sehr stabile Verbindung geschaffen.

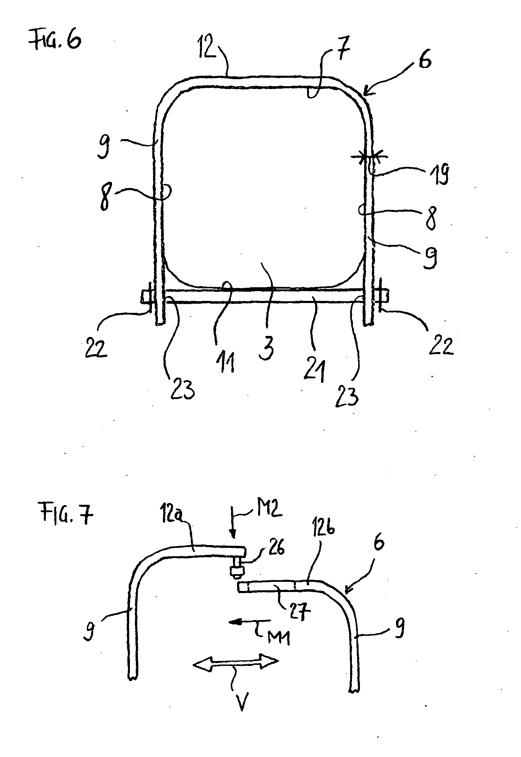

In einer zweiten Ausführungsform der Erfindung erfolgt die Fixierung der Abdeckung 6 an der Traverse 3 dadurch, daß die U-Schenkel 9 der Abdeckung 6 mittels einer Anzahl Querverbindungselemente miteinander verbunden sind derart, daß die Querverbindungselemente an der Traversenunterseite 11 anliegen, vgl. Fig. 6. Als Querverbindungselemente dienen dabei Kunststoffstäbe 21 oder Kunststoffgewindestangen, die mit Hilfe eines Splintes 22 oder einer Schraubmutter an den U-Schenkeln 9 der Abdeckung 6 arretiert werden. Hierzu weisen die U-Schenkel 9 entsprechende Aufnahmebohrungen 23 auf. Diese Ausführung gewährleistet eine besonders sichere Verbindung und verhindert auch unter besonders ungünstigen Umständen ein Abheben der Abdeckung 6.

In den Bereichen der Stützisolatoren 4 weist die Abdeckung 6 Abstandselemente 18 auf zur Gewährleistung eines Berührungsschutzes gegenüber der Stützisolatorbefestigung 5. Diese Abstandselemente 18 erstrecken sich im wesentlichen rechtwinklig von der Traversenoberseite 7 nach oben. Die Länge der Abstandselemente 18 richtet sich nach der Art der Stützisolatorbefestigung 5. Sie ist vorzugsweise derart bemessen, daß eine Berührung der Stützisolatorbefestigung 5 durch einen auf der Abdeckung 6 sitzenden Vogel ausgeschlossen ist.

Die Abstandselemente 18 sind vorzugsweise als separate Bauteile in Winkelform ausgebildet, die auf die Abdeckungsoberseite 7 geklebt werden. Dies hat zum einen den Vorteil, daß die Abstandselemente 18 besonders preiswert herstellbar sind. Zum anderen kann damit von Fall zu Fall entschieden werden, ob eine Abdeckung 6 Abstandselemente 18 aufweisen soll oder nicht. Es ist jedoch ebenso möglich, die Abstandselemente 18 einteilig mit der Abdeckung 6 auszubilden. Die Anstandselemente 18 sind vorzugsweise in einer solchen Anzahl an der Abdeckung 6 vorgesehen, daß jedem Stützisolator 4 ein Abstandselement 18 zugeordnet ist.

In einer weiteren Ausführungsform der Erfindung sind in der Abdeckung 6 eine Anzahl verschließbarer Öffnungen 24 oder Aussparungen vorgesehen, wie sie beispielsweise in Fig. 4 mit durchbrochenen Linien angedeutet sind. Diese Öffnungen 24 sind vorzugsweise mit einem Stopfen oder eine Abdeckkappe 25 verschlossen, vgl. Fig. 5, wobei diese ebenfalls aus einem elektrisch isolierenden und witterungsbeständigen Material (beispielsweise PVC) gefertigt sind, so da0 die isolierende Eigenschaft der Abdeckung 6 nicht verringert wird. Die Öffnungen 24 dienen zur wahlweisen Montage von weiteren Stützisolatoren 4. So kann die in Fig. 4 dargestellte Abdeckung nicht nur für Einfachisolatoren, wie in Fig. 1 gezeigt, sondern auch für Doppelisolatoren, wie in Fig. 2 gezeigt, verwendet werden. Dadurch wird die erforderliche Typenvielfalt verringert. Herstellungs- und Lagerungskosten sind sehr gering. Durch die einfache Handhabung der Öffnungen (nur ein Entfernen der Verschlüsse ist notwendig) lassen sich Stützisolatoren 4 auch bei bereits montierter Abdeckung 6 schnell nachträglich montieren.

Bei Abdeckungen 6 mit zusätzlichen Öffnungen 24 sind vorzugsweise Abstandselemente 18' in ausreichender Zahl bereits vorhanden, vgl. Fig. 4, so daß auch für die Stützisolatorbefestigungen 5 zusätzlicher Stützisolatoren 4 ein Berührungsschutz besteht.

Die Abdeckung 6 ist vorzugsweise aus einem glasfaserverstärkten Kunststoffmaterial (GfK) hergestellt. Dies gewährleistet eine außerordentlich gute Witterungsbeständigkeit und damit eine Einsatzdauer von 30 bis 40 Jahren. Eine vorzeitige Alterung und Materialermüdung, wie bspw. bei der Verwendung eines PVC-Materials, ist ausgeschlossen.

Ist eine derartige Langlebigkeit nicht erforderlich, können jedoch auch andere Werkstoffe mit Isoliereigenschaften zum Einsatz kommen. Insbesondere ist es bei einer Verwendung eines Materials mit federnden Eigenschaften möglich, die U-Schenkel selbst als Befestigungselemente zur Befestigung der Abdeckung an der Traverse auszubilden. Beispielsweise können die U-Schenkel dann im unmontierten Zustand in einem spitzen Winkel aufeinander zu weisen. Bei der Montage werden die U-Schenkel dann auseinandergebogen, wodurch sie im Montageendzustand federnd fest an der Traverse anliegen. Elemente zum Umgreifen bzw. Abstützen der Traversenunterseite können auch in diesem Fall an den Enden der U-Schenkel vorgesehen sein.

Um die von Vogelschützern geforderte Durchschlagsspannung von 11 kV zu erreichen, kommt als Material vorzugsweise Gf-UP (ungesättigtes Polyesterharz) zum Einsatz. Aus Stabilitätsgründen beträgt die Wandstärke 19 der Abdeckung 6 vorzugsweise 3 bis 5 mm. Als besonders vorteilhaft hat sich in diesem Zusammenhang eine Wandstärke von 4 mm erwiesen. Dieser Wert liegt deutlich über dem für eine Durchschlagsspannung von 11 kV geforderten Wert von ca. 1 mm Wandstärke.

Die Abdeckung 6 weist entsprechend der Abmessungen der Traverse 3 bspw. eine Länge von bis zu 2 m auf. Die Federstahlprofile 13 sind dabei vorzugsweise nicht auf der gesamten Länge der Abdeckung 6 vorgesehen. Für eine ausreichende Befestigung sind Federstahlprofile 13 beispielsweise an den beiden Enden der Abdeckung 6 sowie in deren Mitte ausreichend.

Die Erfindung ist sowohl für Freileitungsmaste 1 mit verschiedenen Ausladungen als auch für eine Vielzahl von Freileitungsmastarten anwendbar, insbesondere für Holz-, Beton-, Stahlrohr- und Stahlfachwerkmaste.

Besonders vorteilhaft ist eine Ausführungsform der Erfindung, wie sie in Fig. 7 schematisch dargestellt ist. Danach kann der Abstand zwischen den U-Schenkeln 9 der Abdeckung 6 und damit die Breite der Abdeckung 6 variiert werden kann. Dies erfolgt vorzugsweise derart, daß die Abdeckung 6 zweiteilig ausgeführt ist, wobei die Teilungslinie im Bereich des U-Grundes 12 in Abdeckungslängsrichtung verläuft. Die Abdeckung 6 besteht damit im wesentlichen aus zwei separaten U-Schenkeln 9, an denen jeweils ein Teil des U-Grundes 12 angeformt ist. Die beiden den U-Grund 12 der Abdeckung 6 bildenden Teile 12a bzw. 12b der Schenkel 9 sind nach der Montage (Pfeilrichtungen M1, M2) im montierten Zustand einander überlappend angeordnet und mit Verbindungselementen verbunden, die eine Breitenverstellung durch Verschieben der Schenkel 9 zueinander (Verschieberichtung V) ermöglichen. Beispielsweise kommen als Verbindungselemente eine Anzahl von an einem Teil angebrachten Schrauben 26 oder Bolzen in Frage, die in einem in dem anderen Teil angeordneten Langloch 27 geführt werden. Mit einer solchen Breitenverstellung 6 kann ein einziger Abdeckungstyp für Traversen 3 verschiedener Breite verwendet werden.

### Bezugszeichenliste

- 1: Freileitungsmast
- 2: Mast
- 3: Traverse
- 4: Stützisolator
- 5: Stützisolatorbefestigung
- 6: Abdeckung
- 7: Traversenoberseite
- 8: Traversenseitenfläche

- 9: U-Schenkel
- 10: (frei)
- 11: Traversenunterseite
- 12: U-Grund
- 13: Federstahlprofil
- 14: V-Schenkel
- 15: Nietverbindung
- 16: V-Schenkel
- 17: Montagerichtung
- 18: Abstandselement
- 19: Wandstärke
- 20: (frei)
- 21: Kunststoffstab
- 22: Splint
- 23: Aufnahmebohrung
- 24: Öffnung
- 25: Abdeckkappe
- 26: Schraube
- 27: Langloch

## Patentansprüche

1. Freileitungsmast (1) mit einer an einem Mast (2) angeordneten Traverse (3), an der wenigstens ein Leitungsseil mittels eines Stützisolators (4) abgestützt wird, und wobei die Traverse (3) zumindest teilweise mit einer Abdeckung (6) aus einem elektrisch isolierenden Material versehen ist, die flächig an der Traversenoberseite (7) anliegt, **dadurch gekennzeichnet, daß** die Abdeckung (6) im Bereich des Stützisolators (4) ein von der Traversenoberseite (7) abstehendes Abstandelement (18) zur Gewährleistung eines Berührungsschutzes gegenüber der Stützisolatorbefestigung (5) aufweist.

2. Freileitungsmast (1) nach Anspruch 1, **dadurch gekennzeichnet, daß** die Abdeckung (6) ein im wesentlichen U-förmiges Profil aufweist.

3. Freileitungsmast (1) nach Anspruch 2, **dadurch gekennzeichnet, daß** die Abdeckung (6) an ihren U-Schenkeln (9) Befestigungselemente (13) zur Ausbildung einer Rast- und/oder Schnappverbindung mit der Traverse (3) aufweisen.

4. Freileitungsmast (1) nach Anspruch 3, **dadurch gekennzeichnet, daß** die Befestigungselemente (13) ein im wesentlichen V-förmiges Profil aufweisen, wobei der eine V-Schenkel (14) an der Innenseite eines U-Schenkels (9) der Abdeckung (6) befestigt ist, während sich der andere V-Schenkel (16) im montierten Zustand an der Traversenunterseite (11) abstützt.

5. Freileitungsmast (1) nach Anspruch 2, **dadurch gekennzeichnet, daß** die U-Schenkel (9) der Abdeckung (6) mittels einer Anzahl Querverbindungselemente (21) miteinander verbunden sind derart, daß die Querverbindungselemente (21) an der Traversenunterseite (11) anliegen.

6. Freileitungsmast (1) nach einem der Ansprüche 1 bis 5, **dadurch gekennzeichnet, daß** die Abdeckung (6) eine Anzahl verschließbarer Öffnungen (24) oder Aussparungen aufweist zur wahlweisen Montage von Stützisolatoren (4).

7. Freileitungsmast (1) nach einem der Ansprüche 1 bis 6, **dadurch gekennzeichnet, daß** die Abdeckung (6) aus einem glasfaserverstärkten Kunststoffmaterial besteht.

8. Freileitungsmast (1) nach einem der Ansprüche 2 bis 7, **dadurch gekennzeichnet, daß** der Abstand zwischen den U-Schenkeln (9) der Abdeckung (6) und damit die Breite der Abdeckung (6) variierbar ist.

9. Abdeckung (6) aus elektrisch isolierenden Material für eine Traverse (3) eines Freileitungsmastes (1), wie in einem der Ansprüche 1 bis 8 beschrieben.

## Claims

1. Overhead-line pole (1) having a cross-arm (3) which is arranged on a pylon (2) and on which at least one line cable is supported by means of a supporting insulator (4), and with the cross-arm (3) being provided at least partially with a cover (6) composed of an electrically insulating material, which cover (6) rests over an area on the cross-member upper face (7), **characterized in that**, in the area of the supporting insulator (4), the cover (6) has a spacing element (18), which projects from the cross-arm upper side (7), in order to ensure contact protection with respect to the supporting insulator attachment (5).

2. Overhead-line pole (1) according to Claim 1,
**characterized in that** the cover (6) has an essentially U-shaped profile.

3. Overhead-line pole (1) according to Claim 2,
**characterized in that** the cover (6) has attachment elements (13) on its U-limbs (9), in order to form a latching and/or snap-action connection with the cross-arm (3).

4. Overhead-line pole (1) according to Claim 3,
**characterized in that** the attachment elements (13) have an essentially V-shaped profile, with one V-limb (14) being attached to the inside of a U-limb (9) of the cover (6), while the other V-limb (16) is supported on the cross-arm lower side (11) in the fitted state.

5. Overhead-line pole (1) according to Claim 2,
**characterized in that** the U-limbs (9) of the cover (6) are connected to one another by means of a number of cross-connecting elements (21), such that the cross-connecting elements (21) rest on the cross-arm lower side (11).

6. Overhead-line pole (1) according to one of Claims 1 to 5, **characterized in that** the cover (6) has a number of closable openings (24) or cutouts for selective fitting of supporting insulators (4).

7. Overhead-line pole (1) according to one of Claims 1 to 6, **characterized in that** the cover (6) is composed of a glass-fibre-reinforced plastic material.

8. Overhead-line pole (1) according to one of Claims 2 to 7, **characterized in that** the distance between the U-limbs (9) of the cover (6) and therefore the width of the cover (6) can be varied.

9. Cover (6) composed of electrically insulating material for a cross-arm (3) of an overhead-line pole (1), as described in one of Claims 1 to 8.

## Revendications

1. Poteau de ligne électrique aérienne (1) comprenant une traverse (3) disposée sur un mât (2), sur laquelle est supporté au moins un câble de ligne au moyen d'un isolateur de support (4), la traverse (3) étant pourvue au moins en partie d'un recouvrement (6) en matériau électriquement isolant, qui s'applique à plat sur le côté supérieur de la traverse (7), **caractérisé en ce que** le recouvrement (6) présente, dans la région de l'isolateur de support (4), un élément d'espacement (18) saillant depuis le côté supérieur de la traverse (7) pour garantir une protection de contact vis-à-vis de la fixation de l'isolateur de support (5).

2. Poteau de ligne électrique aérienne (1) selon la revendication 1, **caractérisé en ce que** le recouvrement (6) présente un profil substantiellement en forme de U.

3. Poteau de ligne électrique aérienne (1) selon la revendication 2, **caractérisé en ce que** le recouvrement (6) présente au niveau de ses branches du U (9), des éléments de fixation (13) pour constituer une connexion par encliquetage et/ou par emboîtement avec la traverse (3).

4. Poteau de ligne électrique aérienne (1) selon la revendication 3, **caractérisé en ce que** les éléments de fixation (13) présentent un profil substantiellement en forme de V, l'une des branches du V (14) étant fixée au côté interne d'une branche du U (9) du recouvrement (6), tandis que l'autre branche du V (16) s'appuie dans l'état monté contre le côté inférieur de la traverse (11).

5. Poteau de ligne électrique aérienne (1) selon la revendication 2, **caractérisé en ce que** les branches du U (9) du recouvrement (6) sont connectées l'une à l'autre au moyen d'un certain nombre d'éléments de connexion transversaux (21) de telle sorte que les éléments de connexion transversaux (21) s'appliquent contre le côté inférieur de la traverse (11).

6. Poteau de ligne électrique aérienne (1) selon l'une quelconque des revendications 1 à 5,
**caractérisé en ce que** le recouvrement (6) présente une pluralité d'ouvertures (24) ou d'évidements pouvant être fermés, pour le montage sélectif d'isolateurs de support (4).

7. Poteau de ligne électrique aérienne (1) selon l'une quelconque des revendications 1 à 6,
**caractérisé en ce que** le recouvrement (6) se compose d'un matériau en plastique renforcé par des fibres de verre.

8. Poteau de ligne électrique aérienne (1) selon l'une quelconque des revendications 2 à 7,
**caractérisé en ce que** la distance entre les branches du U (9) du recouvrement (6), et donc la largeur du recouvrement (6), est variable.

9. Recouvrement (6) en matériau électriquement isolant pour une traverse (3) d'un poteau de ligne électrique aérienne (1) tel que décrit dans l'une quelconque des revendications 1 à 8.
